# EUROPEAN PATENT SPECIFICATION

(11) **EP 2 478 697 B1**
(45) Date of publication and mention of the grant of the patent: **08.04.2020**
(21) Application number: 10737587.5
(22) Date of filing: 03.08.2010
(51) Int. Cl.: H04N 5/445

(54) **METHOD AND DEVICE FOR PROVIDING COMPLEMENTARY INFORMATION**
VERFAHREN UND VORRICHTUNG ZUR BEREITSTELLUNG ERGÄNZENDER INFORMATIONEN
PROCÉDÉ ET DISPOSITIF DE FOURNITURE D'INFORMATIONS COMPLÉMENTAIRES

(30) Priority: 15.09.2009 EP 09305845
(43) Date of publication of application: 25.07.2012
(73) Proprietor: InterDigital CE Patent Holdings, 75017 Paris (FR)
(72) Inventor: MA, Xiao Jun, 92443 Issy-les-Moulineaux cedex (FR); XU, Jun, 92443 Issy-les-Moulineaux cedex (FR); ZHOU, Guang Hua, 92443 Issy-les-Moulineaux cedex (FR); LI, Jun, 92443 Issy-les-Moulineaux cedex (FR)
(74) Representative: Huchet, Anne
(86) International application number: PCT/EP2010/061285
(87) International publication number: WO 2011/032777

(56) References cited:
- EP-A2- 0 915 621
- GB-A- 2 349 769
- US-A1- 2003 035 074
- US-A1- 2005 251 823
- US-A1- 2006 117 365
- US-A1- 2006 143 656
- US-B1- 7 272 843

## Description

### TECHNICAL FIELD

The present invention relates to data communication, and more particularly, relates to a method and a device for providing complementary information.

### BACKGROUND

US 2006/0117365 A1 describes a stream output apparatus. The apparatus comprises a sequence information obtaining apparatus for obtaining sequence information representing a reproduction sequence of stream data. The apparatus further comprises a sequencer apparatus for obtaining stream data ready for use with the sequence information obtained by the sequence information obtaining apparatus and for outputting the data in accordance with the sequence designated by the sequence information.

US 7272843 B1 describes a broadcast signal receiver wherein auxiliary information for supplementing broadcast information can be watched at a predetermined time according to an auxiliary information index.

"Two-screen solutions" or "synchronous solutions" are a form of interactive TV that enables information about a TV show to be accessed via the internet on a mobile phone, laptop, desktop PC etc. Unlike one-screen interactive TV solutions, where all of the interactivity is on the television, two-screen applications are typically done on a computer. In these cases, users do not change the content on the television, while they are accessing supplementary information about the show.

### SUMMARY

According to an aspect of present invention, it is provided a method for providing complementary information for principal information in a system having a first presentation device for presenting the principal information and a second presentation device for presenting the complementary information. The method comprises the steps of receiving, by the first presentation device, a configuration file indicating control information of at least one piece of complementary information associated with a piece of principal information to be presented on the first presentation device, wherein the control information comprises a start time point for each piece of complementary information relative to a start time point of the piece of principal information, indicating when to present the complementary information; determining control information of at least one piece of complementary information associated with the piece of principal information to be presented on the first presentation device based on the configuration file; receiving, by the first presentation device, the piece of principal information to be presented on the first presentation device; and sending, by the first presentation device, an instruction message including the control information to the second presentation device to instruct the second presentation device to present the at least one piece of complementary information associated with the received piece of principal information based on the start time point contained in the control information and time information carried in the received piece of principal information.

According to another aspect of the present invention, it is provided a device for providing complementary information for principal information, wherein the complementary information is presented on a second presentation device while the principal information is presented on a first presentation device. The device comprises a receiving module for receiving a piece of principal information and for receiving a configuration file indicating control information of at least one piece of complementary information associated with the received piece of principal information, wherein the control information comprises a start time point for each piece of complementary information relative to a start time point of the piece of principal information, indicating when to present the complementary information; a storage module configured to store the configuration file; and a processing module configured to determine control information of at least one piece of complementary information associated with the received piece of principal information based on the configuration file and to send an instruction message including the control information to the second presentation device to instruct the second presentation device to present the at least one piece of complementary information associated with the received piece of principal information based on the start time point contained in the control information and time information carried in the received piece of principal information.

According to the aspect of the present invention, a solution is provided to present principal information and its associated complementary information on two different presentation devices respectively. It facilitates the user to retrieve the information on the second device without affecting the content shown on the first device. Moreover, the presentation time on the second device can be programmed so as to make sure the complementary information is presented at an appropriate time.

It is to be understood that more aspects and advantages of the invention will be found in the following detailed description of the present invention.

### BRIEF DESCRIPTION OF THE DRAWINGS

The accompanying drawings, which are included to provide a further understanding of the invention and are incorporated in and constitute a part of this application, illustrate embodiments of the invention together with the description which serves to explain the principle of the invention. Therefore, the invention is not limited to the embodiments. In the drawings:
Fig. 1 is a diagram illustrating a system for providing complementary information according to an embodiment of the present invention;
Fig. 2 is a block diagram illustrating functions of the MS and the STB according to the present embodiment of the invention;
Fig. 3 is a flow chart illustrating a method for providing complementary information according to the present embodiment of the invention
Fig. 4 is a diagram illustrating another system for providing complementary information according to the present embodiment of the invention.

### DETAILED DESCRIPTION

An embodiment of the present invention will now be described in detail in conjunction with the drawings. In the following description, some detailed descriptions of known functions and configurations may be omitted for clarity and conciseness.

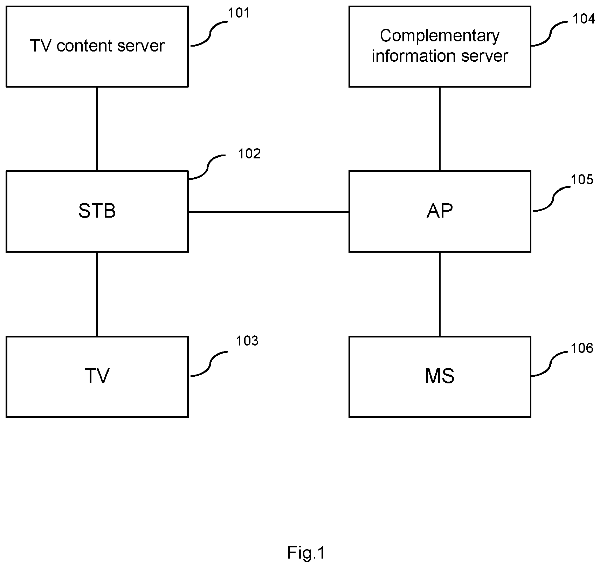

Fig. 1 is a diagram illustrating a system for providing complementary information according to the embodiment of the present invention. It should be noted this example is used to explain the invention and shall not be used to limit the scope of the invention. The exemplary system comprises a TV content server 101, a set top box (STB) 102, a TV 103, a complementary information server 104, an access point (AP) 105 and a mobile station (MS) 106. Details of their functions are as follows:
**The TV content server 101:** it is used to provide TV programs. The programs can be provided in the form of digital signal through a cable network, or an IP network etc.
**The STB 102 and the TV 103:** the STB is used to 1) receive data, i.e. TV programs, configuration files etc. from the TV content server 101; 2) display the TV programs on the TV 103; 3) send messages to and receive messages from the AP 105. As the diagram shows, the STB 102 is connected to the TV content server. Besides, it should be noted the STB 102 can also be connected to an IP network, e.g. the Internet, to fetch or receive information from a server in the IP network.
**The AP 105:** it is connected to the complementary information server 104 through e.g. an IP network, to the STB 102 through e.g. a local area network (LAN), to the MS 106 through e.g. a wireless network. It shall be noted the AP 105 can be other types of access device, e.g. a router or a switch, and the connection between the access device and its associated device, e.g. computer can be a wired connection.
**The MS 106:** it has a display screen for displaying the complementary information and an input function for receiving user's instructions. In addition, it can transmit the user's instructions to the STB 102. For example, when the MS 106 is configured to be capable of controlling the STB 102 and it receives an instruction input, e.g. changing to another channel, from the user, the MS 106 converts the instruction input to the corresponding instruction message that is comprehensible to the STB 102 and transmits the instruction message to the STB 102.
**The complementary information server 104:** it is used to provide TV programs related information, or called complementary information for TV programs. Such information may be in the form of video, audio, text, image, flash etc in terms of presentation style, and in the form of a file or a portion of a file in terms of storage. For example, the complementary information is a portion of a video file. The complementary information may be transmitted to the MS 106 through the AP 105 in the form of data stream as Internet TV does, or transmitted by using, for example, the file transfer protocol (FTP), which means that the complementary information is not displayed on the MS 106 before the completion of the complementary information transmission. A person skilled in the art will appreciate that other technologies for transmission can also be used. In addition, each piece of complementary information is associated with one or more TV programs. Below shows a configuration file for complementary information of TV programs according to the example as shown in the Fig. 1.

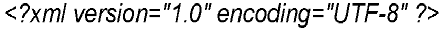

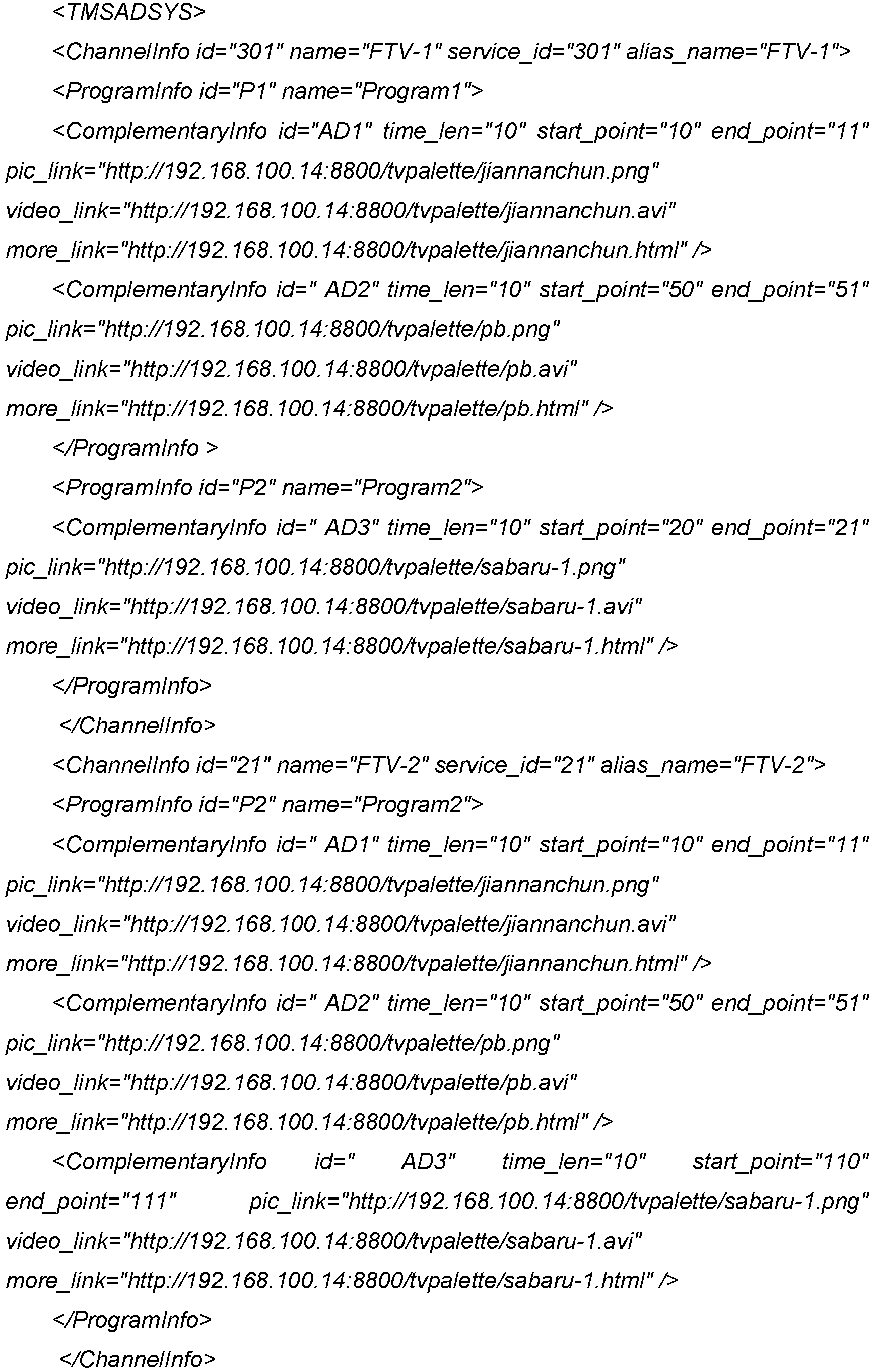

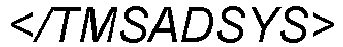

In this example, the configuration file is an extensible markup language (XML) document. It should be appreciated the configuration file may be organized in other forms, e.g. a table etc. It can be seen from the configuration file above that there are two program channels, i.e. FTV-1 and FTV-2. Each program channel is uniquely identified by the channel identifier, i.e. 301 and 21 for FTV-1 and FTV-2 respectively. In addition, each program channel has programs, i.e. FTV-1 channel has two programs of program1 and program2 while FTV-2 channel has one program of program2. Although the FTV-2 channel has a same program as the FTV-1 in this example, it should be noted it does not necessarily require different channels having same programs. The program is uniquely identified by a program identifier, i.e. P1 and P2 for the program1 and the program2 respectively. A program of a channel may be associated with one or more pieces of complementary information. For example, in the FTV-1 channel, complementary information AD1 and AD2 are associated with program1 and AD3 is associated with the program2; and in the FTV-2 channel, complementary information AD1, AD2 and AD3 are associated with program2. Further, each piece of complementary information has an identifier uniquely identifying this piece of complementary information, a link indicating where this complementary information is stored, and its control information. In this example, the complementary information has 3 links for 3 kinds of information, i.e. pic_link, video_link and more_link. The pic_link indicates a path of a picture for the complementary information, the video_link indicates a path of a video for the complementary information and the more_link indicates a path of a web page for the complementary information. The different links for the same piece of complementary information for a TV program allows different presentations on different kinds of display devices based on users' needs. For example, a cell phone may display the picture by using the pic_link, a computer may display the web page by using the more_link, or display the video by using the video_link. The control information in this example comprises parameters of time_len indicating the duration of the complementary information, start_point indicating the starting point in time relative to the start time point of a program with which the complementary information is associated and end_point indicating a point in time relative to the start time point of a program with which the complementary information is associated, wherein the notification message of the complementary information should be sent to the MS before the end_point, or otherwise, the notification message will not be sent. It should be noted a person skilled in the art may contemplate one or more links and one or more parameters of control information based on his practical needs. As in a method described below, we will use the video_link and the start_point parameter.

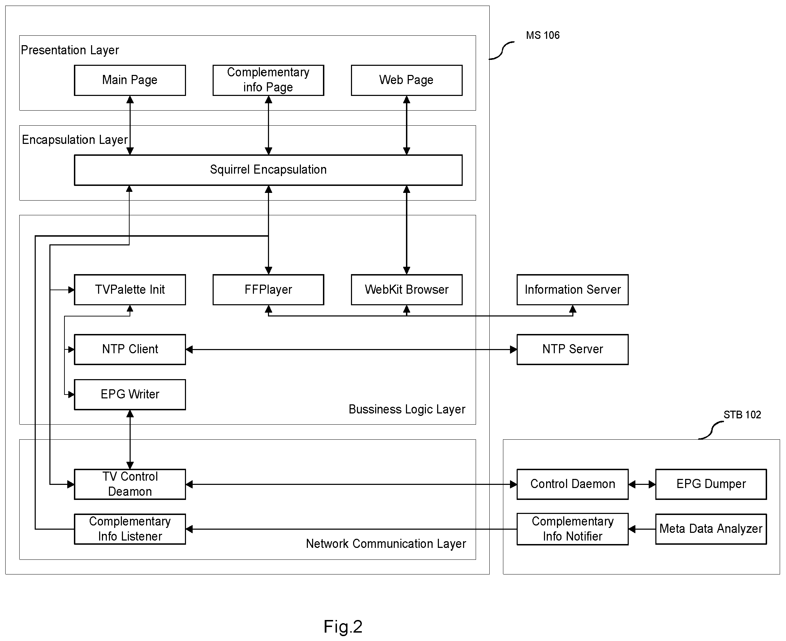

Fig. 2 is a block diagram illustrating functions of the MS 106 and the STB 102 according to the present embodiment of the invention.

The design of the MS 106 contains four layers, i.e networking communication layer, business logic layer, encapsulation layer and presentation layer. A person skilled in the art will appreciate the Fig. 2 is only for describing the invention and shall not be used to limit the scope of the invention, moreover, other designs of the MS 106 can be contemplated by a person skilled in the art after reading the following description.

The presentation layer includes modules of a main page, a complementary information page, and a web page for presentations of main pages, complementary information and web pages respectively. The presentation layer communicates with business logic layer via Squirrel script encapsulation. The Squirrel script is a programming language similar to Java script; it is primarily used as a client-side script language, implemented as an integrated component of the web browser, and allowing the development of enhanced user interfaces and dynamic websites.

In the business logic layer, when the MS starts up or restarts, the module "TVPalette Init" invokes NTP (network time protocol) client and EPG (electronic program guide) writer to get initialization of the MS before presentation of the complementary information. The NTP client communicates with a NTP server to automatically set the date and time of the MS. The EPG writer invokes TV control daemon in network communication layer to get the latest EPG information. The FFPlayer takes the instruction from the complementary Infor Listener in network communication layer and carry out the instruction accordingly. For example, when it is informed there is an instruction for presenting complementary information, it will retrieve the corresponding complementary information from the complementary information server 104 and present the complementary information, e.g. displaying visual information and/or playing aural information. The WebKit browser gets and displays relative web pages from the complementary information server or a web wide web server when the instruction for presenting a web page is received.

In the network communication layer, the TV control daemon module has the following functions: 1) requesting and receiving TV electronic program guide (EPG) from the STB; 2) sending TV control commands to the control daemon of the STB. Such control commands include channel switch, volume control, EPG fetching etc. The complementary Info listener module has the following functions: 1) listening and receiving notifications to present complementary information from the complementary info notifier of the STB if there is complementary information needed to be presented in the MS 106. In this example, the notification message from the STB contains one or more links for the complementary information and a time value indicating when to present. The FFPlayer and WebKit Browser modules use the link to retrieve the complementary information from the complementary information server. It should be noted that complementary information may be stored in a World Wide Web server and the link may be a World Wide Web link, or the complementary information may be stored in a FTP server and the link may be a FTP link.

In the STB, the control daemon and the complementary Info notifier are used to communicate with modules of network communication layer of the MS. Specifically, the control daemon module is used to 1) receive EPG request from the MS and send the EPG to the MS (the EPG is later used by the MS to control the STB, e.g. channel switch etc.). Herein the EPG is generated by the EPG dumper; 2) receive the TV control commands from the MS and execute these commands accordingly, e.g. channel switch, volume control etc. The complementary Info notifier module is used to notify the MS of presentation of the complementary information provided that the Meta data analyzer determines the complementary information is going to be presented on the MS. The meta data analyzer is used to analyze the data stream of programs and determine whether a piece of complementary information is going to be presented on the MS based on the received data stream. Specifically, the Meta data analyzer extracts the current time stamp from the data stream and compares it with the start time point of the corresponding complementary information. The details for the determination can be found in the following description. In addition, the STB can comprise a receiving module for receiving data, a storage module for storing data, e.g. the configuration file as shown above.

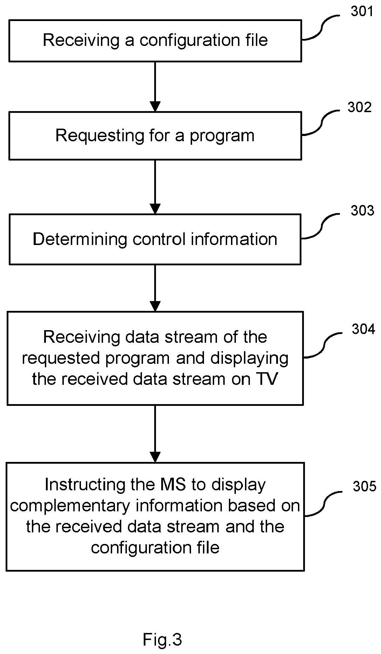

Fig. 3 is a flow chart illustrating a method for providing complementary information according to the present embodiment.

**In the step 301,** the STB receives a configuration file indicating the correspondence relationship between complementary information and programs of channels, control information for the complementary information and storage information for the complementary information from the TV content server 101. It should be noted the configuration file can be received from the complementary information server or other server used to store the configuration file if the STB 102 is connected to the IP based network. In this example for describing the method, the control information includes the start time point of the complementary information relative to start time points of programs, and the storage information includes the video_link. The correspondence relationship indicates which program of which program channel corresponds to which piece(s) of complementary information. In another word, the configuration file indicates which piece of complementary information relates to which program, when to display the complementary information on the MS and where to retrieve the content of the complementary information.

**In the step 302,** the STB requests for a program of a channel. At this step, the STB can obtain a channel identifier uniquely identifying the requested channel and program identifier uniquely identifying the requested program.

**In the step 303**, the STB determines control information of complementary information for the requested program based on the configuration file and the requested program. Specifically, the STB uses the channel identifier and the program identifier to query in the configuration file. Because two or more pieces of complementary information can be associated with a program of a channel, the STB needs to determine control information for all pieces of complementary information associated with the requested program. Herein, the main control information is the start time point of the complementary information.

**In the step 304,** the STB receives data stream of requested program and displays the received data stream on the TV.

**In the step 305,** the STB instructs the MS to display the complementary information associated with the requested program based on the determined control information in the step 303 and received data stream of the requested program. Specifically, the STB determines time stamp of the currently received data stream, compares the determined time stamp with the start time point of the complementary information. When the difference between the start time point and the current time stamp is below a predetermined threshold value, e.g. 30 sec, the STB sends a notification message to notify the MS of the presentation of the complementary information. The notification message includes the control information and storage information for one or more pieces of complementary information to be presented.

After receiving the notification message from the STB, the MS will also monitor the time stamp of data stream of the requested program at its side, and display the complementary information based on the control information. With respect to the transmission of the content of the complementary information, the MS can download the content of the complementary information before presentation, or receive and present the content of the complementary information in the form of data stream.

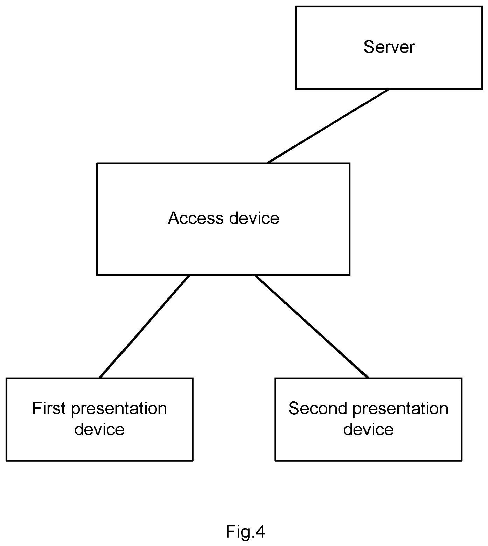

Fig. 4 is a diagram illustrating another system employing the inventive method according to the present embodiment. The system comprises an access device for performing the aforementioned method. The access device connects to one or more servers for receiving principal information, e.g. TV programs, requested video in VOD or IPTV etc., complementary information for the principal information and configuration files. A first presentation device and a second presentation device are used to present principal information and the complementary information respectively. It should be noted that the method can also be performed on the first presentation device instead the access device.

According to a variant of the present embodiment, the STB may not receive the whole configuration file, but only receive portion of the configuration file based on the requested program between the step 302 and the step 303. For example, when a user requests program2 of FTV-2, only the portion of the configuration file describing the program2 of the FTV-2 is sent to the STB. In addition, besides the transmission methods for configuration file described above, the configuration file can be transmitted either entirely or partially to the STB along with the transmission of program data stream as long as it makes sure the corresponding portion of configuration file for the requested program, e.g. including correspondence relationship, control information and storage information is transmitted to the STB before the start time point of the complementary information.

According to a variant of the present embodiment, the complementary information may be associated with a channel other than a program of a channel. In that case, the start time point of the complementary information may be related to the time reference of the channel with which the complementary information is associated with. In addition, in the environment of IPTV or video on demand (VOD), the complementary information is associated with the video files user requested, and the start time point of the complementary information may be related to the start time of the video files. Moreover, besides using the relative time, absolute time can also be used as long as the STB and the MS use the same clock reference.

According to a variant of the present embodiment, when the complementary information is associated with a channel other than a program of a channel, only the channel identifier should be determined in the step 302 and only the channel identifier is used to query in the step 303. Similarly, in case of VOD or IPTV, only a video identifier uniquely identifying the requested video is determined in the step 302 and only the video identifier is used to query in the step 303. A person skilled in the art will understand the configuration file should be modified accordingly, e.g. using the video identifier instead of the channel identifier and program identifier.

## Claims

1. A method for providing complementary information for principal information in a system having a first presentation device (102) for presenting the principal information and a second presentation device (106) for presenting the complementary information, the method comprising:
receiving (301), by the first presentation device (102), a configuration file indicating control information of at least one piece of complementary information associated with a piece of principal information to be presented on the first presentation device (102), wherein the control information comprises a start time point for each piece of complementary information relative to a start time point of the piece of principal information, indicating when to present the complementary information;
determining (303) control information of at least one piece of complementary information associated with the piece of principal information to be presented on the first presentation device (102) based on the configuration file;
receiving (304), by the first presentation device (102), the piece of principal information to be presented on the first presentation device (102); and
sending (305), by the first presentation device (102), an instruction message including the control information to the second presentation device (106) to instruct the second presentation device (106) to present the at least one piece of complementary information associated with the received piece of principal information based on the start time point contained in the control information and time information carried in the received piece of principal information.

2. The method of claim 1, wherein the configuration file indicates the control information of complementary information for all pieces of principal information, and wherein the step of determining (303) further comprises obtaining the control information of the at least on piece of complementary information associated with the received piece of principal information by searching the received configuration file.

3. The method of claim 1, wherein the step of determining (303) further comprises:
receiving a message carrying the control information of the at least one piece of complementary information associated with the received piece of principal information; and
retrieving the control information from the received message.

4. The method of claim 1, wherein the instruction message comprises at least one pointer to a storage location for the at least one piece of complementary information.

5. The method of claim 1, wherein the start time point is a time point relative to a time reference used by both the first presentation device (102) and the second presentation device (106), or a time point relative to a time reference used by the principal information.

6. The method of claim 1, wherein when the time point is relative to a time reference used by the principal information, the step of sending (305) comprises:
obtaining a current time stamp from the received data stream of the received piece of principal information; and
if the difference between the start time point and the current time indicated by the current time stamp is below a predetermined threshold value, sending an instruction message to instruct the second presentation device (106) to present a piece of complementary information corresponding to the start time point.

7. The method of any one of claims 1 to 6, wherein the principal information comprises video data and audio data, and the complementary information comprises at least one of text data, image data, video data, and audio data.

8. A device for providing complementary information for principal information, wherein, the complementary information is presented on a second presentation device (106) while the principal information is presented on a first presentation device (102), wherein the device comprises:
a receiving module for receiving (303) a piece of principal information and for receiving (301) a configuration file indicating control information of at least one piece of complementary information associated with the received piece of principal information, wherein the control information comprises a start time point for each piece of complementary information relative to a start time point of the piece of principal information, indicating when to present the complementary information;
a storage module configured to store the configuration file; and
a processing module configured to determine (303) control information of at least one piece of complementary information associated with the received piece of principal information based on the configuration file and to send (305) an instruction message including the control information to the second presentation device (106) to instruct the second presentation device (106) to present the at least one piece of complementary information associated with the received piece of principal information based on the start time point contained in the control information and time information carried in the received piece of principal information.

9. The device of claim 8, wherein the piece of principal information is carried in a data stream, and wherein the step of sending (305) further comprises:
the processing module obtains a current time stamp from the received data stream; and
if the difference between a start time indicated by the control information and the current time stamp is below a predetermined threshold value, the processing module sends the instruction message to instruct the second presentation device (106) to present the piece of complementary information.

10. The device of claim 8 or 9, wherein the device for providing complementary information and the first presentation device (102) are the same device.

11. The device of claim 8, wherein the processing module is further configured to include at least one pointer to a storage location for the at least one piece of complementary information into the instruction message.

12. The method of claim 1, wherein the at least one piece of complementary information associated with the received piece of principle information comprises information of different kinds allowing different presentations on different kinds of display devices.

13. The device of claim 8, wherein the at least one piece of complementary information associated with the received piece of principal information comprises information of different kinds allowing different presentations on different kinds of display devices.

## Patentansprüche

1. Verfahren zum Bereitstellen von Ergänzungsinformationen für Hauptinformationen in einem System mit einer ersten Darstellungsvorrichtung (102) zum Darstellen der Hauptinformationen und mit einer zweiten Darstellungsvorrichtung (106) zum Darstellen der Ergänzungsinformationen, wobei das Verfahren umfasst:
Empfangen (301) einer Konfigurationsdatei, die Steuerinformationen mindestens einer Ergänzungsinformationseinheit, die einer Hauptinformationseinheit zugeordnet ist, angibt, damit sie auf der ersten Darstellungsvorrichtung (102) dargestellt wird, durch die erste Darstellungsvorrichtung (102), wobei die Steuerinformationen für jede Ergänzungsinformationseinheit relativ zu einem Anfangszeitpunkt der Hauptinformationseinheit einen Anfangszeitpunkt umfassen, der angibt, wann die Ergänzungsinformationen darzustellen sind;
Bestimmen (303) von Steuerinformationen mindestens einer Ergänzungsinformationseinheit, die der auf der ersten Darstellungsvorrichtung (102) darzustellenden Hauptinformationseinheit zugeordnet ist, auf der Grundlage der Konfigurationsdatei;
Empfangen (304) der auf der ersten Darstellungsvorrichtung (102) darzustellenden Hauptinformationseinheit durch die erste Darstellungsvorrichtung (102); und
Senden (305) einer Anweisungsmeldung, die die Steuerinformationen enthält, an die zweite Darstellungsvorrichtung (106) durch die erste Darstellungsvorrichtung (102), um die zweite Darstellungsvorrichtung (106) auf der Grundlage des in den Steuerinformationen enthaltenen Anfangszeitpunkts und der in der empfangenen Hauptinformationseinheit übermittelten Zeitinformationen anzuweisen, die mindestens eine Ergänzungsinformationseinheit, die der empfangenen Hauptinformationseinheit zugeordnet ist, darzustellen.

2. Verfahren nach Anspruch 1, wobei die Konfigurationsdatei die Steuerinformationen von Ergänzungsinformationen für alle Hauptinformationseinheiten angibt, und wobei der Schritt des Bestimmens (303) ferner das Erhalten der Steuerinformationen der mindestens einen Ergänzungsinformationseinheit, die der empfangenen Hauptinformationseinheit zugeordnet ist, durch Durchsuchen der empfangenen Konfigurationsdatei umfasst.

3. Verfahren nach Anspruch 1, wobei der Schritt des Bestimmens (303) ferner umfasst:
Empfangen einer Meldung, die die Steuerinformationen der mindestens einen Ergänzungsinformationseinheit, die der empfangenen Hauptinformationseinheit zugeordnet ist, übermittelt; und
Auslesen der Steuerinformationen aus der empfangenen Meldung.

4. Verfahren nach Anspruch 1, wobei die Anweisungsmeldung mindestens einen Zeiger auf einen Speicherort für die mindestens eine Ergänzungsinformationseinheit umfasst.

5. Verfahren nach Anspruch 1, wobei der Anfangszeitpunkt ein Zeitpunkt relativ zu einer sowohl durch die erste Darstellungsvorrichtung (102) als auch durch die zweite Darstellungsvorrichtung (106) verwendeten Zeitreferenz oder ein Zeitpunkt relativ zu einer durch die Hauptinformationen verwendeten Zeitreferenz ist.

6. Verfahren nach Anspruch 1, wobei der Schritt des Sendens (305), wenn der Zeitpunkt relativ zu einer durch die Hauptinformationen verwendeten Zeitreferenz ist, umfasst:
Erhalten eines gegenwärtigen Zeitstempels aus dem empfangenen Datenstrom der empfangenen Hauptinformationseinheit; und
Senden einer Anweisungsmeldung, um die zweite Darstellungsvorrichtung (106) anzuweisen, eine Ergänzungsinformationseinheit darzustellen, die dem Anfangszeitpunkt entspricht, falls die Differenz zwischen dem Anfangszeitpunkt und der durch den gegenwärtigen Zeitstempel angegebenen gegenwärtigen Zeit unter einem vorgegebenen Schwellenwert liegt.

7. Verfahren nach einem der Ansprüche 1 bis 6, wobei die Hauptinformationen Videodaten und Audiodaten umfassen und wobei die Ergänzungsinformationen Textdaten und/oder Bilddaten und/oder Videodaten und/oder Audiodaten umfassen.

8. Vorrichtung zum Bereitstellen von Ergänzungsinformationen für Hauptinformationen, wobei die Ergänzungsinformationen auf einer zweiten Darstellungsvorrichtung (106) dargestellt werden, während die Hauptinformationen auf einer ersten Darstellungsvorrichtung (102) dargestellt werden, wobei die Vorrichtung umfasst:
ein Empfangsmodul zum Empfangen (303) einer Hauptinformationseinheit und zum Empfangen (301) einer Konfigurationsdatei, die Steuerinformationen mindestens einer Ergänzungsinformationseinheit, die der empfangenen Hauptinformationseinheit zugeordnet ist, angibt, wobei die Steuerinformationen für jede Ergänzungsinformationseinheit relativ zu einem Anfangszeitpunkt der Hauptinformationseinheit einen Anfangszeitpunkt umfassen, der angibt, wann die Ergänzungsinformationen darzustellen sind;
ein Speichermodul, das dafür konfiguriert ist, die Konfigurationsdatei zu speichern; und
ein Verarbeitungsmodul, das dafür konfiguriert ist, auf der Grundlage der Konfigurationsdatei Steuerinformationen mindestens einer Ergänzungsinformationseinheit, die der empfangenen Hauptinformationseinheit zugeordnet ist, zu bestimmen (303) und an die zweite Darstellungsvorrichtung (106) eine Anweisungsmeldung zu senden (305), die die Steuerinformationen enthält, um die zweite Darstellungsvorrichtung (106) auf der Grundlage des in den Steuerinformationen enthaltenen Anfangszeitpunkts und in der empfangenen Hauptinformationseinheit übermittelter Zeitinformationen anzuweisen, die mindestens eine Ergänzungsinformationseinheit, die der empfangenen Hauptinformationseinheit zugeordnet ist, darzustellen.

9. Vorrichtung nach Anspruch 8, wobei die Hauptinformationseinheit in einem Datenstrom übermittelt wird, und wobei der Schritt des Sendens (305) ferner umfasst:
das Verarbeitungsmodul erhält aus dem empfangenen Datenstrom einen gegenwärtigen Zeitstempel; und
das Verarbeitungsmodul sendet die Anweisungsmeldung, um die zweite Darstellungsvorrichtung (106) anzuweisen, die Ergänzungsinformationseinheit darzustellen, falls die Differenz zwischen einem durch die Steuerinformationen angegebenen Anfangszeitpunkt und dem gegenwärtigen Zeitstempel unter einem vorgegebenen Schwellenwert liegt.

10. Vorrichtung nach Anspruch 8 oder 9, wobei die Vorrichtung zum Bereitstellen von Ergänzungsinformationen und die erste Darstellungsvorrichtung (102) dieselbe Vorrichtung sind.

11. Vorrichtung nach Anspruch 8, wobei das Verarbeitungsmodul ferner dafür konfiguriert ist, für die mindestens eine Ergänzungsinformationseinheit in der Anweisungsmeldung mindestens einen Zeiger auf einen Speicherplatz zu enthalten.

12. Verfahren nach Anspruch 1, wobei die mindestens eine Ergänzungsinformationseinheit, die der empfangenen Hauptinformationseinheit zugeordnet ist, Informationen unterschiedlicher Arten umfasst, die auf unterschiedlichen Arten von Anzeigevorrichtungen unterschiedliche Darstellungen zulassen.

13. Vorrichtung nach Anspruch 8, wobei die mindestens eine Ergänzungsinformationseinheit, die der empfangenen Hauptinformationseinheit zugeordnet ist, Informationen unterschiedlicher Arten umfasst, die auf unterschiedlichen Arten von Anzeigevorrichtungen unterschiedliche Darstellungen zulassen.

## Revendications

1. Procédé de fourniture d'informations complémentaires pour des informations principales dans un système ayant un premier dispositif de présentation (102) pour présenter les informations principales et un deuxième dispositif de présentation (106) pour présenter les informations complémentaires, le procédé comprenant :
la réception (301), par le premier dispositif de présentation (102), d'un fichier de configuration indiquant des informations de contrôle d'au moins un élément d'informations complémentaires associé à un élément d'informations principales à présenter sur le premier dispositif de présentation (102), dans lequel les informations de contrôle comprennent un point temporel de départ pour chaque élément d'informations complémentaires par rapport à un point temporel de départ de l'élément d'informations principales, indiquant à quel moment présenter les informations complémentaires ;
la détermination (303) d'informations de contrôle d'au moins un élément d'informations complémentaires associé à l'élément d'informations principales à présenter sur le premier dispositif de présentation (102) en fonction de la configuration ;
la réception (304), par le premier dispositif de présentation (102), de l'élément d'informations principales à présenter sur le premier dispositif de présentation (102) ; et
l'envoi (305), par le premier dispositif de présentation (102), d'un message d'instruction comprenant les informations de contrôle au deuxième dispositif de présentation (106) pour indiquer au deuxième dispositif de présentation (106) de présenter l'au moins un élément d'informations complémentaires associé à l'élément d'informations principales reçu d'après le point temporel de départ contenu dans les informations de contrôle et les informations temporelles transportées dans l'élément d'informations principales reçu.

2. Procédé selon la revendication 1, dans lequel le fichier de configuration indique les informations de contrôle des informations complémentaires pour tous les éléments d'informations principales, et dans lequel l'étape de détermination (303) comprend en outre l'obtention des informations de contrôle de l'au moins un élément d'informations complémentaires associé à l'élément d'informations principales reçu par la recherche du fichier de configuration reçu.

3. Procédé selon la revendication 1, dans lequel l'étape de détermination (303) comprend en outre :
la réception d'un message transportant les informations de contrôle de l'au moins un élément d'informations complémentaires associé à l'élément d'informations principales reçu ; et
la récupération des informations de contrôle à partir du message reçu.

4. Procédé selon la revendication 1, dans lequel le message d'instruction comprend au moins un pointeur vers un emplacement de stockage pour l'au moins un élément d'informations complémentaires.

5. Procédé selon la revendication 1, dans lequel le point temporel de départ est un point temporel par rapport à une référence temporelle utilisée par le premier dispositif de présentation (102) et le deuxième dispositif de présentation (106), ou un point temporel par rapport à une référence temporelle utilisée par les informations principales.

6. Procédé selon la revendication 1, dans lequel lorsque le point temporel se rapporte à une référence temporelle utilisée par les informations principales, l'étape d'envoi (305) comprend :
l'obtention d'un horodatage actuel à partir du flux de données reçu de l'élément d'informations principales reçu ; et
si la différence entre le point temporel de départ et l'heure actuelle indiquée par l'horodatage actuel est inférieure à une valeur seuil prédéterminée, l'envoi d'un message d'instruction pour indiquer au deuxième dispositif de présentation (106) de présenter un élément d'informations complémentaires correspondant au point temporel de départ.

7. Procédé selon l'une quelconque des revendications 1 à 6, dans lequel les informations principales comprennent des données vidéo et des données audio, et les informations complémentaires comprennent au moins des données texte, des données image, des données vidéo ou des données audio.

8. Dispositif de fourniture d'informations complémentaires pour des informations principales, dans lequel les informations complémentaires sont présentées sur un deuxième dispositif de présentation (106) tandis que les informations principales sont présentées sur un premier dispositif de présentation (102), dans lequel le dispositif comprend :
un module de réception pour recevoir (303) un élément d'informations principales et pour recevoir (301) un fichier de configuration indiquant des informations de contrôle d'au moins un élément d'informations complémentaires associé à l'élément d'informations principales reçu, dans lequel les informations de contrôle comprennent un point temporel de départ pour chaque élément d'informations complémentaires par rapport à un point temporel de départ de l'élément d'informations principales, indiquant à quel moment présenter les informations complémentaires ;
un module de stockage configuré pour stocker le fichier de configuration ; et
un module de traitement configuré pour déterminer (303) les informations de contrôle d'au moins un élément d'informations complémentaires associé à l'élément d'informations principales reçu d'après le fichier de configuration et pour envoyer (305) un message d'instruction contenant les informations de contrôle au deuxième dispositif de présentation (106) pour indiquer au deuxième dispositif de présentation (106) de présenter l'au moins un élément d'informations complémentaires associé à l'élément d'informations principales reçu d'après le point temporel de départ contenu dans les informations de contrôle et les informations temporelles transportées dans l'élément d'informations principales reçu.

9. Dispositif selon la revendication 8, dans lequel l'élément d'informations principales est transporté dans un flux de données, et dans lequel l'étape d'envoi (305) comprend en outre :
l'obtention par le module de traitement d'un horodatage actuel à partir du flux de données reçu ; et
si la différence entre une heure de départ indiquée par les informations de contrôle et l'horodatage actuel est inférieure à une valeur seuil prédéterminée, le module de traitement envoie le message d'instruction pour indiquer au deuxième dispositif de présentation (106) de présenter l'élément d'informations complémentaires.

10. Dispositif selon la revendication 8 ou 9, dans lequel le dispositif de fourniture d'informations complémentaires et le premier dispositif de présentation (102) sont le même dispositif.

11. Dispositif selon la revendication 8, dans lequel le module de traitement est en outre configuré pour inclure au moins un pointeur vers un emplacement de stockage pour l'au moins un élément d'informations complémentaires dans le message d'instruction.

12. Procédé selon la revendication 1 ou dispositif selon la revendication 1, dans lequel l'au moins un élément d'informations complémentaires associé à l'élément d'informations principales reçu comprend des informations de différents types permettant différentes présentations sur différents types de dispositifs d'affichage.

13. Dispositif selon la revendication 8, dans lequel l'au moins un élément d'informations complémentaires associé à l'élément d'informations principales reçu comprend des informations de différents types permettant différentes présentations sur différents types de dispositifs d'affichage.
